# EUROPEAN PATENT SPECIFICATION

(11) **EP 1 824 937 B1**
(45) Date of publication and mention of the grant of the patent: **16.04.2008**
(21) Application number: 05810052.0
(22) Date of filing: 29.11.2005
(51) Int. Cl.: C09D 123/26, C09D 103/02, C09D 103/04, C08J 5/02

(54) **COMPOSITION FOR PRODUCING A BARRIER LAYER ON A LAMINATED PACKAGING MATERIAL**
ZUSAMMENSETZUNG ZUR HERSTELLUNG EINER BARRIERESCHICHT AUF LAMINIERTEN VERPACKUNGSMATERIAL
COMPOSITION POUR LA PRODUCTION D'UNE COUCHE BARRIERE SUR UNE MATIERE D'EMBALLAGE STRATIFIEE

(30) Priority: 17.12.2004 EP 04106674
(43) Date of publication of application: 29.08.2007
(73) Proprietor: Akzo Nobel NV, 6800 SB Arnhem (NL); Eka Chemicals AB, 445 80 Bohus (SE)
(72) Inventor: GREENWOOD, Peter, S-413 18 Göteborg (SE); LAGNEMO, Hans, S-417 28 Göteborg (SE)
(74) Representative: Vikholm, Tommy
(86) International application number: PCT/SE2005/001786
(87) International publication number: WO 2006/065196

(56) References cited:
- WO-A-00/40404
- WO-A-01/17774
- WO-A-03/031720

## Description

The present invention relates to a barrier composition comprising a dispersion, emulsion or solution of a polymer, starch or starch derivative; silica particles and a curing agent capable of cross-linking said polymer, starch or starch derivative and coupling said silica particles thereto. The invention also relates to a barrier layer obtainable from said barrier composition and a method of providing such composition and layer. The invention also relates to a laminated packaging material comprising a substrate layer and a barrier layer formed from a barrier composition on at least one side of the substrate layer. The invention also relates to the use thereof, inter alia to provide a packaging container, a barrier film etc.

Within the packaging industry, it is well known to employ laminated packaging materials of a single-use disposable nature for the packing and transport of dry or liquid foods. Normally, such laminated packaging material is built up from a configurationally rigid but foldable substrate layer, for example consisting of paper or paperboard, in order to obtain good mechanical configurational stability. Liquid-tight coatings of plastic are laid on both sides of the substrate layer and protect the liquid-absorbing fibres of the substrate layer effectively from being penetrated by moisture. These outer layers normally consist of a thermoplastic, preferably polyethylene, which moreover imparts to the packaging material superior thermosealing properties so that the packaging material may be converted into finished packages of the desired geometric configuration. However, laminated packaging material which consists solely of paper or paperboard and liquid-tight plastic lacks tightness against gases, in particular oxygen gas. This is a major disadvantage in the packing of many foods whose shelf-life declines dramatically when they come into contact with oxygen gas, for example fruit juices. In order to supplement the packaging material with a barrier against gases, in particular against oxygen gas, it belongs to the prior art technology to lay on a layer possessing superior tightness to oxygen gas, for example aluminium foil or polyvinyl alcohol, on that side of the substrate layer which is intended to face in towards the interior of the package. In comparison with aluminium foil, polyvinyl alcohol possesses many desirable properties, for which reason it is to be preferred as a barrier material in many contexts. Among other things, polyvinyl alcohol possesses higher mechanical strength, better compatibility with foods and is more economical, at the same time as enjoying excellent properties as an oxygen gas barrier. It has further been deemed as a suitable material, in certain cases from the environmental viewpoint or with a view to recycling and recovery to replace aluminium foil as gas barrier material in food packages.

WO03/031720 discloses a packaging material in which a barrier layer was prepared by mixing colloidal silica particles and polyvinyl alcohol on a film. The deposed coating was subsequently heat-treated at 150 °C and cured at 200 °C. However, the heat treatment of the forming coating film results in an insufficient oxygen barrier. The curing at an elevated temperature of 200 °C can result in deterioration of the physical properties of the substrate. There is thus a need in the art to provide a material which obviates the drawbacks of the aluminium foil as oxygen barrier while providing a satisfying oxygen barrier. The present invention intends to provide a barrier layer capable of preventing diffusion or penetration of materials such as gases, liquids, and solids through the barrier layer. Such material may be e.g. water in liquid or gaseous state, oxygen or any type of components in foods packaged in containers comprising said barrier layer. Particularly, there is an aim in the present invention to provide improved water resistance and reduced oxygen transmission through a barrier layer.

A further problem commonly met in the prior art is the environmental aspect on the chemicals used to produce a packaging material for food products. Such chemicals have many times proved to be unsuitable. There is thus a need to provide a method which renders an end product without any harmful substances or chemicals incorporated therein which could be detrimental or even toxic to the content of the produced package. A further object of the invention is to provide a method which does not require heat-treatment of the forming barrier layer which may be disastrous to the structure thereof. A further object of the invention is to provide a cost-effective and simple method which still provides a satisfying barrier coating.

The present invention intends to solve the drawbacks of the prior art.

The present invention relates to a method of producing an aqueous barrier composition comprising mixing colloidal silica particles; a polymer, starch or starch derivatives; and a curing agent in a dispersion, wherein the curing agent is capable of cross-linking said polymer, starch or starch derivative and coupling silica particles to said polymer, starch or starch derivative.

In this context, the term "coupling" indicates that the silica particles are linked, attached or connected to the polymer or cross-linked polymer, starch or starch derivatives, such that the transmission of liquids, solids, or gases is further reduced in view of a sole cross-linked polymer comprising a network of polymer chains which have been crosslinked.

The method may be performed at room temperature or at an elevated temperature. Preferably, however, the temperature is from about 0 to about 150, more preferably from about 10 to about 120, even more preferably from about 20 to about 100, and most preferably from about 20 to about 60 °C.

According to one embodiment, after addition of the curing agent to the further components, the temperature is in the range from about 0 to about 160, such as from about 50 to about 140, or from about 80 to about 130, or from about 90 to about 120 °C. According to one embodiment, the reaction of the components is performed from about 30 seconds to about 1 h, such as from about 1 minute to about 15 minutes, or from about 1 minute to about 10 minutes, or 1 minute to about 5 minutes. However, the time necessary to perform the reaction varies depending on choice of components used, e.g. which curing agent is used and the temperature(s) at which the reaction is performed.

The colloidal silica particles are preferably dispersed in water or mixture of water and organic solvents such as lower alcohols, but preferably solely in water. The pH of the aqueous dispersion suitably is from about 1 to about 12, preferably from about 2 to about 11, and most preferably from about 7 to about 11. The silica content in the dispersions suitably ranges from about 1 to about 70, preferably from about 5 to about 50 wt%. The silica particles are preferably anionic and dispersed in the presence of stabilising cations such as K⁺, Na⁺, Li⁺, NH₄⁺ , amines such as quaternary amines, or the like or mixtures thereof. The silica particles, dispersed in water or solvent, may also occur in aluminate modified form, as described by Dr. Ralph ller in "The Chemistry of Silica", 1979, pages 407-409.

The specific surface area of the silica particles suitably is from about 20 to about 1000, preferably from about 30 to about 750, more preferably from about 50 to about 500, even more preferably from about 70 to about 400, and most preferably from about 120 to about 300 m²/g. The silica particle size distribution suitably ranges from about 2 to about 200, preferably from about 3 to about 100, even more preferably from about 5 to about 60, even more preferably from about 7 to about 40, and most preferably from about 9 to about 23 nm.

The silica particles suitably have a broad particle size distribution and a relative standard deviation of the particle size distribution of at least about 30 %, preferably at least about 40%, and most preferably at least about 50 % by numbers.

The relative standard deviation of the particle size distribution corresponds to the ratio between the standard deviation of the particle size distribution and the average particle size by numbers. "Variation coefficient" and "coefficient of variation" are terms synonymous to "relative standard deviation". The relative standard deviation of the particle size distribution is measured by use of the dynamic light scattering method. By particle size is meant the particle diameter of the silica particles.

Preferably, the silica particles are added in an amount of about 10 to about 80, more preferably from about 20 to about 70, even more preferably from about 30 to about 70, and most preferably from about 45 to about 60 wt% based on the total dry weight of the components mixed.

The polymer is suitably based on a polymer that has functional hydroxyl or carboxyl groups. However, other suitable functional groups may also be used. The polymer is suitably selected from the group that consists of ethylene acrylic acid copolymer, ethylene methacrylic copolymer, ethylene vinyl acetate copolymer, polyvinyl alcohol, ethylene vinyl alcohol copolymer, modified ethylene copolymer, styrene copolymers and combinations thereof. However, many other polymers may also be used which may be dispersed or emulsified in a solution and which preferably per se subsequent to curing thereof provide barrier properties.

Further suitable polymers include modified poly(vinyl alcohols), polycarboxylates, poly(ethylene glycols), poly(propylene glycols), polyvinylpyrrolidones, polyallylamines, poly(acrylic acids), polyamidamines polyacrylamides, polypyrroles, proteins such as casein, soybean proteins, synthetic proteins, polysaccharides such as cellulose derivatives including methylcelluloses, ethylcelluloses,hydroxyethylcelluloses, ethylhydroxyethylcelluloses, ethylhydroxyethylcelluloses or carboxymethylcelluloses, and starches or modified starches; chitosan, polysaccharide gums such as e.g. guar gums, arabic gums, xanthan gums and mastic gums and mixtures or hybrids thereof. Further polymers include latices which may be synthetic and/or natural latices based on emulsions of resins and/or polymers of various types, inter alia acrylate-latex or other latices which may be emulsified or dispersed in an aqueous solution, as well as styrenebutadiene polymers, butadiene polymers, polyisoprene polymers, butyl polymers, nitrile polymers, vinylacetate homopolymers, acrylic polymers such as vinylicacrylic copolymers or styrene-acrylic polymers, polyurethanes, epoxy polymers, cellulosic polymers; e.g. micro cellulose, melamine resins, neoprene polymers, phenol based polymers, polyamide polymers, polyester polymers, polyether polymers, polyolefin polymers, polyvinyl butyral polymers, silicones such as silicone rubbers and silicone polymers (e.g. silicone oils), urea-formaldehyde polymers, vinyl polymers or mixture or hybrids thereof.

Preferably, the polymer, starch or starch derivative is added in an amount of about 20 to about 90, more preferably from about 30 to about 80, even more preferably from about 30 to about 70, and most preferably from about 40 to about 55 wt% based on the total dry weight of the components mixed.

The curing agent may be selected from a group of agents capable of cross-linking polymers according to the present invention and coupling silica particles such that these silica particles are attached to the polymers. Such formation can provide cross-linked network of polymers or chains of polymers and silica particles which can reduce the transmission of liquids and gases through the forming barrier coating.

Suitable curing agents include polyamidoamine resins such as inter alia Kymene 625, Kenores 220, water-soluble zirconium compounds such as zirconia sols or zirconium salts such as zirconium nitrate, potassium zirconium carbonate, ammonium zirconium carbonate; sulphonic acids such as methyl sulphonic acid, dodecyl benzene sulphonic acid. However, also further curing agents including other sulphonic acids or salts may be used as well as strong acids such as e.g. minerals acids, e.g. sulphuric acid, phosphorous acid or hydrochloric acid, nitric acid, and mixtures thereof, which may also be used as long as they cross-link the polymers and and can couple silica particles.

The curing agent is preferably added in an amount of about 0.01 to about 20, more preferably from about 0.02 to about 10, even more preferably from about 0.1 to about 5, and most preferably from about 0.2 to about 2 wt% based on the dry total weight of the components mixed.

Suitably, a dispersion or emulsifying agent may be used in appropriate amount if needed to emulsify or disperse a polymer, starch or starch derivative to make the forming aqueous barrier composition more homogeneous. Such amount may be from about 0.1 to about 2, preferably from about 0.5 to about 1 wt% based on the total dry weight of the components mixed.

The invention also relates to an aqueous barrier composition obtainable from the method as disclosed herein. The invention also relates to a barrier composition comprising an aqueous composition of silica particles; at least one polymer, starch, or a starch derivative; and a curing agent capable of cross-linking said polymer, starch or starch derivative and coupling said silica particles to the polymer, starch, or starch derivative.

The selection of colloidal silica particles, polymers, polymer starch or starch derivative, and curing agent can be made from any of the species as disclosed herein in the production of the barrier layer composition. The invention further relates to a barrier layer which may be obtained by drying the aqueous barrier composition. The drying may be performed at room temperature or by heating the barrier composition to an appropriate temperature.

The formed barrier layer (coating) may have a total coating thickness of from about 1 to about 50, preferably from about 1 to about 40, even more preferably from about 1 to about 30, even more preferably from about 1 to about 20, even more preferably from about 5 to about 20, and most preferably from about 10 to about 15 µm.

The barrier layer finds many uses. Preferably, the barrier layer is used as a layer in a packaging material, paper coating, board coating, plastic films such as polyolefin films for packaging material. Examples of polyolefins are oriented polypropylene films (OPP), polyester films, and polyethylene films.

The invention further relates to a packaging material comprising a barrier layer and a substrate layer. The substrate layer preferably involves paper or paperboard, normally of a surface weight or grammage of from about 50 to about 600, preferably from about 200 to about 500 g/m². However, it is also possible that the substrate layer comprises a polymer material, preferably with a corresponding surface weight or grammage. The barrier layer is preferably applied as a liquid film of the aqueous barrier composition as described herein. The barrier layer is preferably laid directly on the substrate layer or on a carrier layer using coating technology, in a surface weight of about 1 to about 30, preferably from about 5 to about 20, and most preferably from about 10 to about 15 g/m² calculated on the weight. If the applied layer is too thin, the barrier properties may be too poor and if it is too thick there is a risk the barrier layer becomes rigid which in turn may cause cracks therein. The carrier layer may consist of paper, plastic, plastic coated paper, or combinations thereof. Preferably, the carrier layer preferably consists of paper of a surface weight or grammage of about 5 to about 35, preferably from about 7 to about 25, and most preferably from about 10 to about 20 g/m². The carrier layer, the barrier layer, and the substrate layers are suitably united as conventionally done in the prior art.

The invention further involves a container, specifically suitable for foods, made from the packaging material. The container may be produced according to any conventional method known in the art.

The invention being thus described, it will be obvious that the same may be varied in many ways. Such variations are not to be regarded as a departure from the gist and scope of the present invention, and all such modifications as would be obvious to one skilled in the art are intended to be included within the scope of the claims. While the examples here below provide more specific details of the reactions, the following general principles may here be disclosed. The following examples will further illustrate how the described invention may be performed without limiting the scope of it.

All parts and percentages refer to part and percent by weight, if not otherwise stated.

### Example 1

A silica sol (Bindzil® 40/170), a commercial silica sol available from Eka Chemicals AB, was added to polyvinyl alcohol (PVOH) while stirring at room temperature. Thereafter, a curing agent was added to the mixture.

Films were cast in 200 µm slot. Films which were not heated were dried at room temperature for 24 hours. Films which were heated for 10 minutes at 100 °C were first dried for 4 h at room temperature whereafter they again were dried at room temperature for 20 hours more.

**Table 1**

| No | Bindzil® 40/170 (g) | PVOH-10 % (g) | Curing agent | Amount curing agent (g) |
|---|---|---|---|---|
| 1 | 25 | 100 | --- | --- |
| 2 | 25 | 100 | Kymene 625 | 0.25 |
| 3 | 25 | 100 | Kenores 220 | 0.25 |
| 4 | 25 | 100 | AZC | 0.125 |
| 5 | 25 | 100 | AZC | 0.25 |

| | | | | |
|---|---|---|---|---|
| AZC: Ammonia zirconium carbonate. Kenores 220 and Kymene 625 are polyamidoamine resins available from Eka Chemicals AB and Hercules respectively. | | | | |

### Water resistance

5 drops of water were deposited on each respective film and the water resistance was evaluated after 24 h according to the table below with the following indications:
0: dissolved film
1: severe impact on the film
2: some impact on the film
3: no impact

**Table 2**

| No | Film (20 °C) | Film (100 °C) |
|---|---|---|
| 1 | 0 | 1 |
| 2 | 1 | 2 |
| 3 | 1 | 2 |
| 4 | 1 | 1-2 |
| 5 | 1 | 2 |

As can be clearly seen from table 2, the water resistance is increased when a curing agent has been added contributing to the formation of a polymer network and coupling of silica particles thereto, compared to reference 1.

### Example 2

Further experiments were run in accordance with example 1 except for different amounts and species of silica sols (Bindzil® silica sols available from Eka Chemicals AB) and curing agents making up the final oxygen barrier coating. The prepared coatings which were not heated were first dried 6 hours instead of 4 hours as in example 1.

**Table 3**

| No | Sol | Amount sol (g) | Mowilith LDM 7602S (g) | Curing agent | Amount curing agent (g) |
|---|---|---|---|---|---|
| 1 | Bindzil® 40/170 | 85 | 100 | Kymene 625 | 3.7 |
| 2 | -"- | 85 | 100 | Kenores 220 | 3.7 |
| 3 | Bindzil® 30/360 | 113 | 100 | --- | --- |
| 4 | -"- | 113 | 100 | Kymene 625 | 4.3 |
| 5 | -"- | 113 | 100 | Kenores 220 | 4.3 |

### Water resistance

3 drops of water were deposited on a respective film to evaluate the water resistance according to the above mentioned categories 0-3. The water resistance was measured after 10 minutes.

**Table 4**

| No | Film (20 °C) | Film (100 °C) |
|---|---|---|
| 1 | 2 | 3 |
| 2 | 2 | 3 |
| 3 | 0 | 1 |
| 4 | 2 | 2-3 |
| 5 | 2 | 2-3 |

As can be clearly seen, the curing agent contributes to increased water resistance in view of reference 3.

### Example 3

A silica sol (Bindzil® 40/170), a commercial silica sol available from Eka Chemicals AB, was added to polyvinyl alcohol (PVOH) of different molecular weights while stirring at room temperature. Thereafter, a curing agent was added to the mixture.

Films were cast in 200 µm slot. Films which were not heated were dried at room temperature for 24 hours. Films which were heated for 10 minutes at 100 °C or 150 °C were first dried for 20 h at room temperature whereafter they again were dried at room temperature for 4 hours more.

**Table 5**

| No | Bindzil® 40/170 (g) | PVOH-10 % (g) | P\/OH ,M_{w}(g/mole) | Curing agent | Amount curing agent (g) |
|---|---|---|---|---|---|
| 1 | 25 | 100 | 9 000-10 000 | --- | --- |
| 2 | 25 | 100 | 9000-10000 | H₂SO₄ (conc.) | 0.25 |
| 3 | 25 | 100 | 13 000 - 23 000 | --- | |
| 4 | 25 | 100 | 13 000-23 000 | H₂SO₄ (conc.) | 0.50 |
| 5 | 25 | 100 | 22 000 | --- | |
| 6 | 25 | 100 | 22 000 | H₂SO₄ (conc.) | 0.50 |
| 7 | 25 | 100 | 22 000 | Methyl sulphonic acid | 0.50 |
| 8 | 25 | 100 | 89 000-98 000 | --- | |
| 9 | 25 | 100 | 89 000-98 000 | H₂SO₄(conc.) | 0.25 |
| 10 | 25 | 100 | 89 000-98 000 | H₂SO₄(conc.) | 0.50 |
| 11 | 25 | 100 | 89 000 - 98 000 | HCI (37 %) | 0.50 |
| 12 | 25 | 100 | 89 000 - 98 000 | Methyl sulphonic acid | 0.50 |

### Water resistance

10 drops of water were deposited on each respective film and the water resistance was evaluated after 24 h according to the table below with the following indications:
0: dissolved film
1: severe impact on the film
2: some impact on the film
3: no impact

**Table 6**

| No | Film (20 °C) | Film (100 °C) | Film (150 °C) | Film clarity | Note |
|---|---|---|---|---|---|
| 1 | 0 -(1) | 0-1 | 0-1 | Opaque film | Reference |
| 2 | 0-(1) | 0-1 | 3 | Slightly opaque film | |
| 3 | 0 | 1 | 2 | Opaque film | Reference |
| 4 | 0 | 2 | 2 | Slightly opaque film | |
| 5 | 0 | 0-1 | 1 | Opaque film | Reference |
| 6 | 0 | 1 | 3 | Clear film | |
| 7 | 0 | 2 | 2-3 | Slightly opaque film | |
| 8 | 0 | 1-(2) | (1)-2 | White/opaque film | Reference |
| 9 | 2 | (2)-3 | 3 | Slightly opaque film | |
| 10 | 1-(2) | (2)-3 | 3 | Slightly opaque film | |
| 11 | (1)-2 | (2)-3 | 3 | Slightly opaque film | |
| 12 | 0-1 | (2)-3 | 3 | Slightly opaque film | |

As can be clearly seen from table 6, the water resistance is increased when a curing agent has been added contributing to the formation of a polymer network and coupling of silica particles thereto, compared to references. Further, it can be noted that the film clarity improves upon addition of a curing agent indicating improved film compatibility.

### Example 4

A silica sol (Bindzil® 40/170), a commercial silica sol available from Eka Chemicals AB, was added to polyvinyl alcohol (PVOH) while stirring at room temperature. Thereafter, a curing agent was added to the mixture.

Films were cast in 200 µm slot. Films were first dried for 20 h at room temperature, heated for 10 minutes at elevated temperature, as given in table 8, whereafter they again were dried at room temperature for 4 hours more.

**Table 7**

| No | Bindzil® 40/170 (g) | PVOH-10 % (g) | PVOH ,M_{W}(g/mole) | Curing agent | Amount curing agent (g) |
|---|---|---|---|---|---|
| 1 | 25 | 100 | 89 000 - 98 000 | --- | --- |
| 2 | 25 | 100 | 89 000 - 98000 | H₃PO₄ (conc.) | 0.50 |

### Water resistance

10 drops of water were deposited on each respective film and the water resistance was evaluated after 24 h according to the table below with the following indications:
0: dissolved film
1: severe impact on the film
2: some impact on the film
3: no impact

**Table 8**

| No | Film (100 °C) | Film (110 °C) | Film (120 °C) | Film (130 °C) | Film (140 °C) |
|---|---|---|---|---|---|
| 1 | 1 | --- | --- | 1 | --- |
| 2 | 1-2 | 1-2 | 2 | 2 | 1-2 |

Films with curing agent were clear/slightly opaque while films made from compositions without curing agent were white/highly opaque.

### Example 5

A silica sol (Bindzil® 40/170), a commercial silica sol available from Eka Chemicals AB, was added to polyvinyl alcohol (PVOH) while stirring at room temperature. Thereafter, a curing agent was added to the mixture.

Films were cast in 200 µm slot. Films were first dried for 20 h at room temperature, heated for different time intervals at 150 °C, as given in table 10, whereafter they again were dried at room temperature for 4 hours more.

**Table 9**

| No | Bindzil® 40/170 (g) | PVOH-10 % (g) | PVOH ,M_{w}(g/mole) | Curing agent | Amount curing agent (g) |
|---|---|---|---|---|---|
| 1 | 25 | 100 | 89000-98000 | -- | --- |
| 2 | 25 | 100 | 89000-98000 | H₃PO₄ (conc.) | 0.50 |

### Water resistance

10 drops of water were deposited on each respective film and the water resistance was evaluated after 24 h according to the table below with the following indications:
0: dissolved film
1: severe impact on the film
2: some impact on the film
3: no impact

**Table 10**

| No | Heating time at 150 °C | | | | | | |
|---|---|---|---|---|---|---|---|
| | 30 sec. | 1 min. | 2 min. | 4 min. | 6 min. | 8 min. | 10 min. |
| 1 | 0-1 | 0-1 | 1 | 1 | 2 | 1 | 1 |
| 2 | 0-1 | 0-1 | 2 | 2 | 2-3 | 2 | 0-1 |

## Claims

1. Method of producing an aqueous composition comprising mixing colloidal silica particles; a polymer, starch or starch derivative; and a curing agent in a dispersion, wherein the curing agent is capable of cross-linking said polymer, starch or starch derivative and coupling the silica particles to said polymer, starch or starch derivative.

2. Method according to claim 1, wherein the dispersion is heated while adding the curing agent.

3. Method according to any of claim 1 or 2, wherein the dispersion is heated to a temperature from about 0 to about 150 °C.

4. Method according to any of claim 1 to 3, wherein the colloidal silica particles have a specific surface area from about 50 to about 500 m²/g.

5. Method according to any of claim 1 to 4, wherein the curing agent is selected from sulphonic acids or salts, polyaminoamide resins, zirconium compounds, mineral acids, and mixtures thereof.

6. Method according to any of claim 1 to 5, wherein the polymer is a latex.

7. Method according to any of claim 1 to 6, wherein the polymer is a polyvinyl alcohol.

8. Aqueous composition comprising colloidal silica particles; at least one polymer, starch, or a starch derivative; and a curing agent capable of cross-linking said polymer, starch or starch derivative.

9. Barrier layer obtainable by drying an aqueous composition as claimed in claim 8.

10. Method of producing a laminated packaging material comprising a substrate layer and a barrier layer as claimed in claim 9, wherein the packaging material is formed by depositing and subsequently drying an aqueous composition as claimed in claim 8 on a substrate layer.

11. Laminated packaging material obtainable from the method of claim 10

12. Use of a laminated packaging material as claimed in claim 11 as a container for liquid or solid food products.

## Patentansprüche

1. Verfahren zur Herstellung einer wässrigen Zusammensetzung, umfassend das Mischen kolloidaler Silicateilchen, eines Polymers, Stärke oder Stärkederivats, und eines Härtungsmittels in eine Dispersion, wobei das Härtungsmittel geeignet ist, das Polymer, die Stärke oder das Stärkederivat zu vernetzen und die Silicateilchen an das Polymer, die Stärke oder das Stärkederivat zu kuppeln.

2. Verfahren gemäß Anspruch 1, wobei die Dispersion während der Zugabe des Härtungsmittels erwärmt wird.

3. Verfahren gemäß einem der Ansprüche 1 oder 2, wobei die Dispersion auf eine Temperatur von etwa 0 bis etwa 150°C erwärmt wird.

4. Verfahren gemäß einem der Ansprüche 1 bis 3, wobei die kolloidalen Silicateilchen eine spezifische Oberfläche von etwa 50 bis etwa 500 m²/g haben.

5. Verfahren gemäß einem der Ansprüche 1 bis 4, wobei das Härtungsmittel ausgewählt ist aus Sulfonsäuren oder -salzen, Polyaminoamidharzen, Zirkoniumverbindungen, Mineralsäuren und Gemischen davon.

6. Verfahren gemäß einem der Ansprüche 1 bis 5, wobei das Polymer ein Latex ist.

7. Verfahren gemäß einem der Ansprüche 1 bis 6, wobei das Polymer ein Polyvinylalkohol ist.

8. Wässrige Zusammensetzung, umfassend kolloidale Silicateilchen, mindestens ein Polymer, Stärke oder ein Stärkederivat, und ein Härtungsmittel, welches das Polymer, die Stärke oder das Stärkederivat vernetzen kann.

9. Barriereschicht, erhältlich durch Trocknen einer wie in Anspruch 8 beanspruchten wässrigen Zusammensetzung.

10. Verfahren zur Herstellung eines laminierten Verpackungsmaterials, umfassend eine Substratschicht und eine wie in Anspruch 9 beanspruchte Barriereschicht, wobei das Verpackungsmaterial durch Auftragen und anschließendes Trocknen einer wie in Anspruch 8 beanspruchten wässrigen Zusammensetzung auf einer Substratschicht gebildet wird.

11. Laminiertes Verpackungsmaterial, erhältlich durch das Verfahren von Anspruch 10.

12. Verwendung eines wie in Anspruch 11 beanspruchten laminierten Verpackungsmaterials als Behälter für flüssige oder feste Lebensmittel.

## Revendications

1. Procédé de production d'une composition aqueuse, comprenant le fait de mélanger, dans une dispersion :
- des particules de silice colloïdale,
- un polymère, un amidon ou un dérivé d'amidon,
- et un agent durcisseur,
lequel agent durcisseur est capable de faire réticuler ledit polymère, amidon ou dérivé d'amidon, et de coupler les particules de silice audit polymère, amidon ou dérivé d'amidon.

2. Procédé conforme à la revendication 1, dans lequel on chauffe la dispersion pendant qu'on y ajoute l'agent durcisseur.

3. Procédé conforme à la revendication 1 ou 2, dans lequel on chauffe la dispersion à une température d'environ 0 à environ 150 °C.

4. Procédé conforme à l'une des revendications 1 à 3, dans lequel les particules de silice colloïdale présentent une aire spécifique d'environ 50 à environ 500 m²/g.

5. Procédé conforme à l'une des revendications 1 à 4, pour lequel l'agent durcisseur est choisi parmi les acides sulfoniques et leurs sels, les résines de type polyaminoamide, les composés du zirconium et les acides minéraux, ainsi que les mélanges de tels corps.

6. Procédé conforme à l'une des revendications 1 à 5, dans lequel le polymère est un latex.

7. Procédé conforme à l'une des revendications 1 à 6, dans lequel le polymère est un poly(alcool vinylique).

8. Composition aqueuse, comprenant :
- des particules de silice colloïdale,
- un polymère, un amidon ou un dérivé d'amidon,
- et un agent durcisseur, capable de faire réticuler ledit polymère, amidon ou dérivé d'amidon.

9. Couche barrière, que l'on peut obtenir en faisant sécher une composition aqueuse conforme à la revendication 8.

10. Procédé de production d'un matériau d'emballage stratifié comprenant une couche substrat et une couche barrière conforme à la revendication 9, dans lequel on forme le matériau d'emballage en déposant sur une couche substrat une composition aqueuse conforme à la revendication 8 et en faisant ensuite sécher celle-ci.

11. Matériau d'emballage stratifié, que l'on peut obtenir en suivant un procédé conforme à la revendication 10.

12. Emploi d'un matériau d'emballage stratifié, conforme à la revendication 11, en tant que récipient pour produits alimentaires liquides ou solides.
